# EUROPÄISCHE PATENTSCHRIFT

(11) **EP 0 570 730 B1**
(45) Veröffentlichungstag und Bekanntmachung des Hinweises auf die Patenterteilung: **19.03.1997**
(21) Anmeldenummer: 93106844.9
(22) Anmeldetag: 28.04.1993
(51) Int. Cl.: G01C 11/02

(54) **Verfahren zur Erdbeobachtung**
Earth observation method
Méthode d'observation de la terre

(30) Priorität: 21.05.1992 DE 4216828
(43) Veröffentlichungstag der Anmeldung: 24.11.1993
(73) Patentinhaber: DORNIER GMBH, D-88004 Friedrichshafen (DE)
(72) Erfinder: Langemann, Manfred, Dipl.-Ing., W-7758 Stetten (DE); Mallow, Uwe, Dipl.-Ing., W-7990 Friedrichshafen (DE); Benz, Rudolf, Dr.-Ing., W-7997 Immenstaad (DE); Schüssler, Harald, Dr.-Ing., W-7758 Meersburg (DE)
(74) Vertreter: Landsmann, Ralf, Dipl.-Ing.

(56) Entgegenhaltungen:
- EP-A- 0 325 957
- US-A- 4 405 943
- ESA JOURNAL Bd. 15, Nr. 2, 1991, NOORDWIJK NL Seiten 141 - 148; F.SHAHIDI ET AL. 'Interactive Imaging and Real-Time Pointing in an Auroral Imaging Observatory'
- PATENT ABSTRACTS OF JAPAN vol. 13, no. 096 (P-839)7. MÄrz 1989 & JP-A-63 278 179 (MITSUBISHI ELECTRIC CORP)
- PATENT ABSTRACTS OF JAPAN vol. 14, no. 75 (M-934) 13. Februar 1990 & JP-A-12 93 300 (MITSUBISHI ELECTRIC CORP.)
- Proceedings of the International Tele-metering Conference, 28-30 September 1976, LA, CA, USA, D.L.Feinberg:"MIDISS: A Unique Multi-Processor Telemetry Ground Station", Seiten 271-280
- PATENT ABSTRACTS OF JAPAN vol. 9, no. 334 (P-417) 27. Dezember 1985 & JP-A-60 158 377 (NIPPON DENKI KK)

## Beschreibung

Die Erfindung betrifft ein Verfahren zur raumgestützten Erdbeobachtung.

Bei den bisher angewandten Verfahren steht eine einzelne Bodenstation mit entsprechenden Sende-und Empfangsvorrichtungen im Kontakt mit dem Raumsegments, z.B. einem Satelliten.
Sämtliche Beobachtungsdaten werden an die Bodenstation übermittelt und aufgezeichnet. Kundenwünsche zur Beschaffung von Erdbeobachtungsdaten werden über diese Bodenstation abgewickelt. Dazu trifft der Kunde eine Auswahl aus der Menge der an der Bodenstation vorhandenen Daten.
Dieses Verfahren hat den Nachteil, daß die aufgenommenen Daten erst mit größerer Verzögerung (Stunden oder Tage) beim Kunden vorliegen. Bedingt durch die globale Übertragung sämtlicher Beobachtungsdaten sammeln sich an den Bodenstationen große Datenbestände an.

Aus dem **esa journal**, Bd 15, Nr. 2, 1991, Seiten 141 bis 148, F. SHAHIDI et al: Interactive Imaging and Real-Time Pointing in an Auroral Imaging Observatory und der **JP-A-63278179** sind jeweils Verfahren zur Erdbeobachtung bekannt, wobei von einem ersten raumgestützten Beobachtungssensor kontinuierlich ein Ausschnitt des überflogenen Geländes erfaßt wird, und die Sensordaten parallel zur Datenerfassung an eine Bodenstation übertragen werden. An der Bodenstation erfolgt eine Auswahl aus den übertragenen Beobachtungsdaten, und das Ergebnis der Auswahl wird an einen zweiten raumgestützten Beobachtungssensor übertragen.
Vom zweiten Beobachtungssensor werden die den ausgewählten Sensordaten entsprechenden Geländeausschnitte erfaßt, indem der zweite Beobachtungssensor auf die entsprechenden Geländeausschnitte ausgerichtet wird. Die Auflösung des zweiten Beobachtungssensors ist höher als die des ersten Beobachtungssensors.

Aus der **US-A-44 05 943** ist ein weiteres Verfahren zur Beobachtung bekannt, bei dem von einem raumgestützten Beobachtungssensor kontinuierlich ein Ausschnitt des überflogenen Geländes mit hoher Auflösung erfaßt wird und die Sensordaten in einer bordseitigen Datenverarbeitungsvorrichtung kurzzeitig gespeichert werden. Eine Untermenge der Sensordaten wird an eine Bodenstation übertragen, wobei der Geländebereich, auf dem der Operator auf dem Bildschirm in der Bodenstation momentan den Blick gerichtet hat, in hoher Auflösung übertragen wird, und der übrige Bildausschnitt mit niedriger Auflösung übertragen wird.

Ändert sich die Blickrichtung des Operators, so wird ein entsprechendes Kommando an die bordseitige Datenverarbeitungsanlage gegeben, so daß anschließend eine entsprechend modifizierte Übertragung der Daten an die Bodenstation erfolgt.

Der Erfindung liegt die Aufgabe zugrunde, ein Verfahren für die raumgestützte Erdbeobachtung zu schaffen, mit der die Benutzerfreundlichkeit erhöht wird.

Diese Aufgabe wird durch Verfahren nach den Ansprüchen 1, 7 und 10 gelöst. Ausbildungen der Erfindung sind Gegenstände weiterer Ansprüche.

Ein Raumsegment (Satellit) nimmt mit Hilfe eines Beobachtungssensors Teile des überflogenen Gebiets auf und bietet es allen Nutzern, in deren Sichtbarkeitsbereich sich das Raumsegment befindet, in Echtzeit in einfacher Qualität zur Auswahl kundenspezifischer Meßziele an. Die Nutzer können sich innerhalb einer vorgegebenen Zeit entscheiden, welche Teildaten, unter welchen beobachtungstechnischen Randbedingungen (z.B. geometrische Auflösung, spektrale Kanäle, Meßort, Größe des Meßgebiets) an ihre Bodenstation in nahezu Echtzeit noch im Verlauf des aktuellen Überflugs übertragen und am Boden aufgezeichnet werden sollen. Eine globale bordseitige Aufzeichnung von Daten ist nicht notwendig. Die Zusammenstellung der jeweiligen kundenspezifischen Daten erfolgt bordseitig auf Telekommando durch die Kunden selbst. Die Aufnahme der kundenspezifischen Daten erfolgt durch einen zweiten Beobachtungssensor mit hoher Auflösung, dessen Beobachtungsbereich dem Beobachtungsbereich des ersten Sensors in einem festen Abstand nacheilt. Die beiden Beobachtungssensoren müssen nicht notwendigerweise auf demselben raumgestützten Träger vorhanden sein. Das Gesamtssystem zur Durchführung des Verfahrens umfaßt demnach einen oder mehrere raumgestützte Träger, die mit jeweils einem oder mehreren Sensoren ausgestattet sind, einen bordseitigen Datenspeicher, eine beliebige Anzahl von Nutzerbodenstationen, eine Zweiwege-Kommunikationsverbindung Nutzerbodenstation - Raumsegment und zurück, sowie eine Bodenstation für den Systembetrieb, ebenfalls mit einer Zweiwege-Kommunikationsverbindung.
Die Beschaffungszeiten für Daten reduzieren sich von derzeit mehreren Wochen auf die Zeitspanne innerhalb der die gewünschte Aufnahme physikalisch vom Raumsegment aus möglich ist. Danach werden die Daten dem Anforderer während des Meßüberflugs zur Verfügung gestellt. Das Verfahren erlaubt die gleichzeitige Nutzung durch mehrere Kunden, die sich im Sichtbarkeitsbereich des Raumsegments befinden.

In Abwandlung des bisher beschriebenen Verfahrens ist es auch möglich , nur einen Beobachtungssensor zu verwenden, der in diesem Fall eine hohe Auflösung besitzen muß. Sämtliche Sensordaten werden kurzzeitig, in einer vorteilhaften Ausführung in der Größenordnung von 6 Minuten, in einem Datenspeicher an Bord des Raumsegments gespeichert. Die Dauer der Speicherung hängt dabei von der Verweildauer der Bodenstationen im Sichtbarkeitsbereich des Raumsegments ab. Die Datenspeicherelektronik bietet den Bodenstationen in nahezu Echtzeit einen Auszug des Datenspeicherinhalts in einfacher Qualität an, der es den Bodenstationsnutzem erlaubt, die anwendungsspezifischen Daten zu identifizieren und mittels Telekommando vom Raumsegment anzufordern. Die Übertragung der kundenspezifischen Daten an die Bodenstationen erfolgt auch hier noch während des aktuellen Überflugs, während sich die Bodenstation noch im Sichtbarkeitsbereich des Raumsegments befindet.
Eine weitere Variante unter Benutzung nur eines hochauflösenden Bobachtungssensors besteht darin, die Orientierung des Bobachtungssensors fest zu definieren und den Bodenstationen diese Orientierung in regelmäßigen Abständen mitzuteilen. Die Bodenstationen können dann anhand von vorausgerechneten zukünftigen Beobachtungsgebieten ihre Auswahl treffen. Sobald das Raumsegment in den Empfangsbereich der Bodenstation eindringt, wird die Beobachtungsanforderung der Bodenstationen an das Raumsegment übertragen. Der Beobachtungssensor erfaßt die ausgewählten Geländeausschnitte noch während des aktuellen Überflugs. Dabei ist es möglich, die Bodenstation in Kenntnis der zukünftigen Beobachtungsgebiete vorzuprogrammieren.

Die Nutzerbodenstationen, die mindestens aus einem Sende- und Empfangsteil, einem Bildschirm und einem Aufzeichnungsgerät bestehen, erlauben dem Nutzerfolgende Funktionen:
a) Empfang der aktuell aufgenommenen Sensordaten in Echtzeit und in einfacher Qualität, sowie deren Darstellung auf einen Bildschirm
b) interaktive Auswahl von Teildatenmengen mit einer bestimmten datentechnischen Qualität
c) Telekommandierung der Kundenanforderungen an das Raumsegment
d) Telemetrie und Speicherung der nun kundenspezifischen Daten in nahezu Echtzeit dezentral in den Bodenstationen der jeweiligen Kunden.

Die Kommunikation zwischen Bodenstation- und Raumsegment kann entweder direkt oder über eine boden- bzw. raumgestützte Datenrelaisstation erfolgen.
Die Kunden erhalten durch den Systembetreiber eine Autorisierung zur Nutzung des Systems, die einzelnen Beobachtungsaufgaben werden dann durch die Kunden autonom, ohne weitere Eingriffe durch den zentralen Systembetreiber durchgeführt.

Das erfindungsgemäße Verfahren erlaubt den Nutzern die Echtzeitbeobachtung und Echtzeitdatenselektion, d.h. die Entscheidung ob Daten aufgezeichnet werden sollen und wenn ja, für welchen Meßort, welchen Bildausschnitt und welchen weiteren technischen Anforderungen wie geometrische Auflösung, spektraler Kanäle, etc, das Datenmaterial genügen soll. Die von den Nutzern gewünschten Daten werden an Bord des Raumsegments zusammengestellt, so daß an die Nutzer nur die von ihnen angeforderten Daten in nahezu Echtzeit übertragen werden müssen. Nicht vom Nutzer angeforderte Daten, die im Raumsegment zur Verfügung stehen, werden nicht übertragen. Die dezentral zu übertragenden Datenmengen können damit gegenüber herkömmlichen Verfahren deutlich eingeschränkt werden. Die nutzerseitigen Anforderungen für den Empfang und die Verarbeitung der Daten können ebenfalls eingeschränkt und an die jeweiligen Erfordernisse der Nutzer angepaßt werden.

Im folgenden wird die Erfindung mit Hilfe von Figuren ausführlich erläutert. Es zeigen:
- Fig. 1: eine Übersichtsdarstellung zur Durchführung des erfindungsgemäßen Verfahrens
- Fig. 2: eine Darstellung des Empfangsbereichs einer Nutzerbodenstation
- Fig. 3: den funktionalen Aufbau einer Nutzerbodenstation.

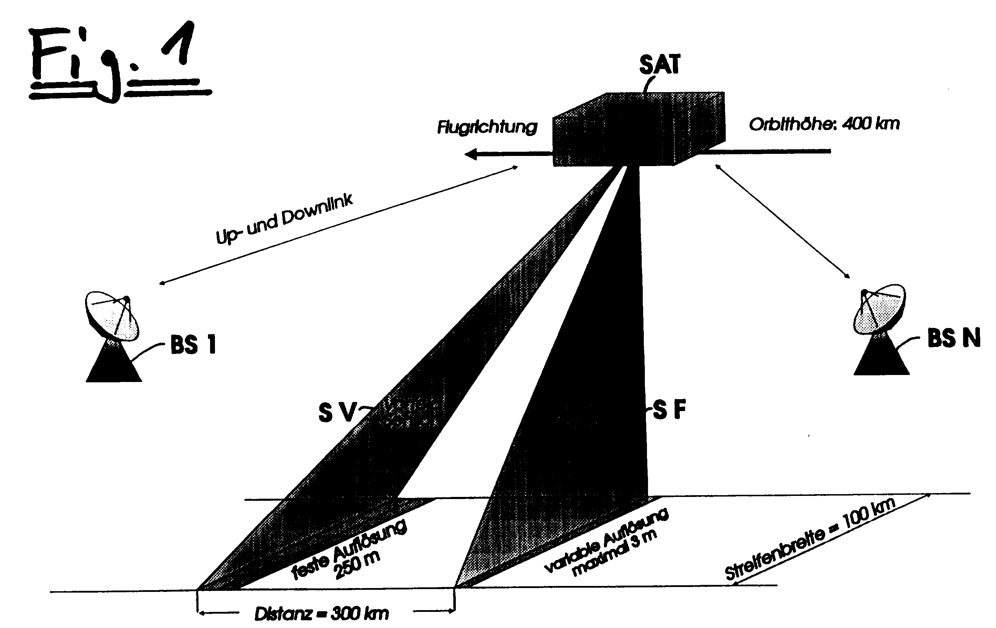

Fig. 1 zeigt eine Gesamtübersicht zur Durchführung des Verfahrens. Ein Raumsegment SAT, daß sich mit einer bestimmten Geschwindigkeit relativ zur Erdoberfläche bewegt, trägt zwei Beobachtungssensoren, wobei der Beobachtungsbereich SV des ersten Sensors (Vorfeldsensor) dem Beobachtungsbereich SF des zweiten Sensor (Feinsensor) auf der Erdoberfläche vorauseilt. Der Feinsensor SF ist in diesem Beispiel auf den Nadirpunkt ausgerichtet. Die Distanz zwischen den Beobachtungsbereichen beträgt vorteilhaft ca. 300 km. Die beiden Sensoren decken die gleiche Breite quer zur Flugrichtung des Raumsegments ab. Der fortlaufend von den beiden Sensoren auf der Erdoberfläche überstrichene Bereich wird im folgenden als Beobachtungsstreifen bezeichnet. Die Streifenbreite beträgt bevorzugt 100 km.
Der Vorfeldsensor hat in dieser beispielhaften Ausführung eine feste Auflösung von ca. 250 m.
Die Daten des Vorfeldsensors werden kontinuierlich und parallel zur Datenaufnahme zu den im momentanen Empfangsbereich liegenden dezentralen Nutzerbodenstationen BS 1, BS N übertragen. Dies verschafft dem Nutzer einen Überblick über das Gebiet, welches später mit dem hochauflösenden Feinsensor aufgenommen werden kann.
Der Auflösung des Feinsensors ist variabel mit einer maximalen Auflösung von bis zu 3 m. Eine Zeile des Feinsensors hat ca. 32 000 Pixelelemente.
Auf Anforderung des Nutzers kann ein bestimmter Ausschnitt des Beobachtungsbereichs SF des Feinsensors in nahezu Echtzeit zur Nutzerbodenstation BS 1, BS N übertragen werden.
Die Datenübertragungsrate ist für alle Klassen von Bodenstationen konstant und beträgt in einer vorteilhaften Ausführung 1,0 Mbps.
Die vom Satellit in Echtzeit lieferbaren Bildgrößen sind in einer vorteilhaften Ausführung für jeden Sensor konstant, beispielsweise:

| Sensor | Spektralbereich | Pixelauflösung |
|---|---|---|
| Vorfeld | panchromatisch | 400 x N (N kontinuierlich) |
| | multispektral | 2000 x 2000 |
| Fein | panchromatisch | 2000 x 2000 |

Jede Nutzerbodenstation BS 1, BS N hat einen speziell zugewiesenen Übertragungskanal. Dadurch wird eine absolute Datendiskretion erreicht.

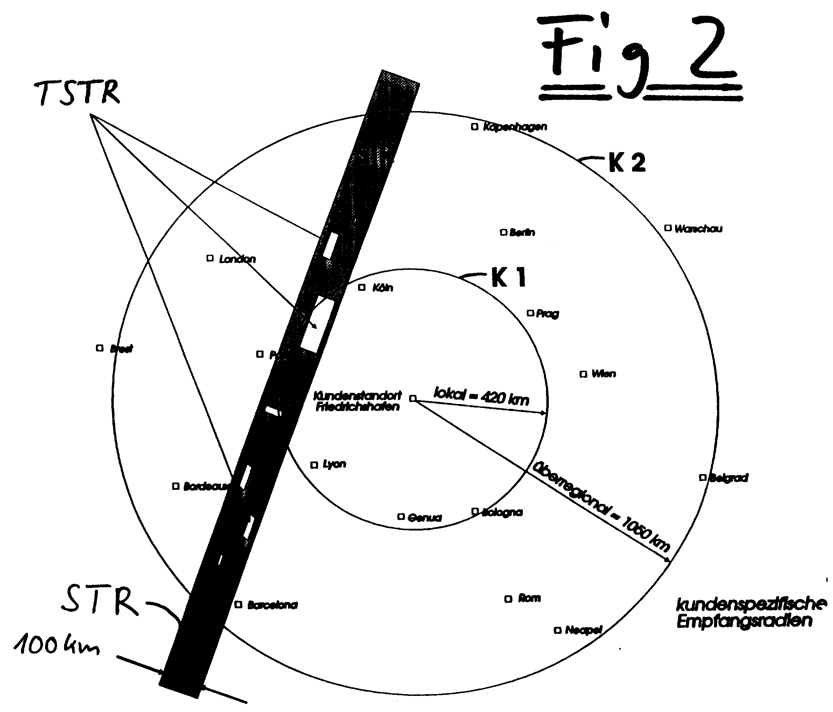

Fig. 2 zeigt eine Darstellung möglicher Empfangsbereiche für eine Nutzerbodenstation. Der Standort der betrachteten Bodenstation befindet sich im Zentrum der beiden Abstandskreise K1,K2. Man unterscheidet je nach Empfangsdurchmesser der Bodenstation zwischen lokalem Kunden, regionalem Kunden und überregionalem Kunden. Zusätzlich ist ein typischer Beobachtungsstreifen STR der Breite 100 km mit darin enthaltenen Bildern oder Teilstreifen TSTR entsprechend der Anforderungen der Nutzer eingezeichnet (nicht maßstabsgerecht).
Für die einzelnen Empfangsdurchmesser sind folgende Werte für Mindestelevation des Raumsegments und Antennendurchmesser einer Bodenstation notwendig:

| Empfangsdurchmesser | Antennendurchmesser | Mindestelevation |
|---|---|---|
| 2100 km (überregionaler Kunde) | 3,5 m | 15 Grad |
| 1500 km (regionaler Kunde) | 2,0 m | 25 Grad |
| 840 km (lokaler Kunde) | 1,1 m | 40 Grad |

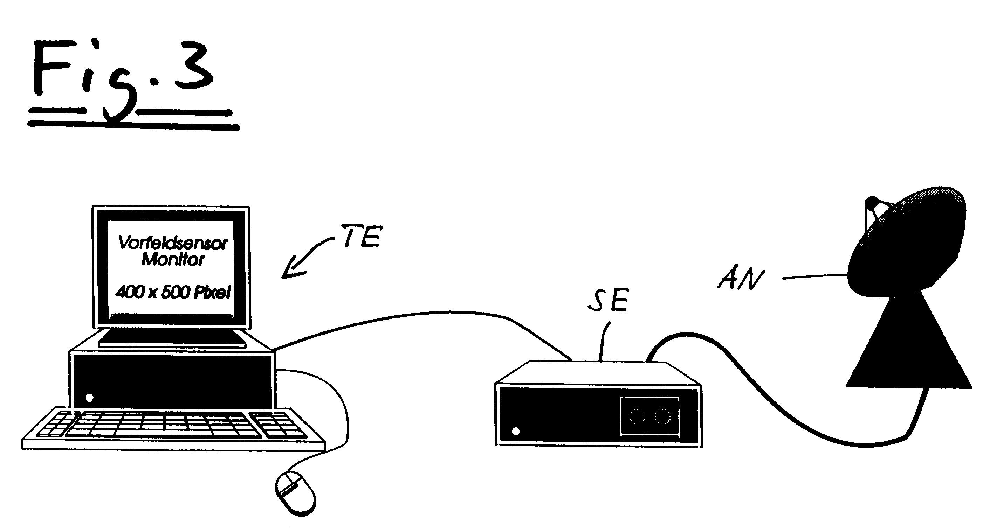

Fig. 3 zeigt schematisch eine mögliche Ausbildung einer Nutzerbodenstation. Sie umfaßt eine drehbare Antenne AN, deren Durchmesser vom gewünschten Empfangsradius abhängt. Mit der Antenne AN verbunden ist eine Sende/Empfangseinrichtung SE mit integriertem Datenspeicher. Der Empfänger ist für Datenübertragungsraten bis 1,0 Mbps geeignet. Der Sender besitzt typischerweise eine Leistung von 0,1 Watt. Der Datenspeicher ist in diesem Beispiel als Magnetkassettenspeicher mit einer Kapazität von 500 MBit ausgebildet.
Ein Empfangsterminal TE mit Mikrorechner und Monitor dient zur Darstellung und Auswahl der Vorfeldsensordaten. Es umfaßt in einer vorteilhaften Ausführung folgende kommerziell erhältlichen Elemente:
PC 386/87
1 Gbyte Festplatte
VGA Monitor
Maus
Low level Bildverarbeitungs-S/W.

## Patentansprüche

1. Verfahren zur Erdbeobachtung, wobei
- von einem ersten raumgestützten Beobachtungssensor kontinuierlich ein Ausschnitt des überflogenen Geländes erfaßt wird
- die Sensordaten parallel zur Datenerfassung kontinuierlich an mehrere Bodenstationen übertragen werden
- an den Bodenstationen unabhängig voneinander eine Auswahl aus den übertragenen Beobachtungsdaten erfolgt und das Ergebnis der Auswahl jeder Bodenstation an einen zweiten raumgestützten Beobachtungssensor übertragen wird, wobei der Beobachtungsbereich des zweiten Beobachtungssensors dem Beobachtungsbereich des ersten Beobachtungssensors nacheilt und die beiden Beobachtungsbereiche die gleiche Breite quer zur Flugrichtung abdecken
- vom zweiten Beobachtungssensor die den ausgewählten Sensordaten entsprechenden Geländeausschnitte innerhalb seines Beobachtungsbereichs erfaßt werden, wobei die Auflösung des zweiten Beobachtungssensors höher ist als die des ersten Beobachtungssensors.

2. Verfahren nach Anspruch 1, dadurch gekennzeichnet, daß die Sensordaten des zweiten Beobachtungssensors an die Bodenstationen noch im Verlauf des aktuellen Überflugs übertragen werden.

3. Verfahren zur Erdbeobachtung, nach einem der vorangehenden Ansprüche, dadurch gekennzeichnet, daß von den Bodenstationen Parameter für die Datenaufnahme des zweiten raumgestützten Beobachtungssensors, z.B. Auflösung, spektraler Kanal, übermittelt werden.

4. Verfahren zur Erdbeobachtung nach einem der vorangehenden Ansprüche, dadurch gekennzeichnet, daß die Distanz zwischen den Beobachtungsbereichen von erstem und zweitem Beobachtungssensor bei etwa 300 km liegt.

5. Verfahren zur Erdbeobachtung nach einem der vorangehenden Ansprüche, dadurch gekennzeichnet, daß der zweite Beobachtungssensor eine variable Auflösung besitzt wobei die maximale Auflösung etwa 3 m beträgt.

6. Verfahren zur Erdbeobachtung nach einem der vorangehenden Ansprüche, dadurch gekennzeichnet, daß der erste Beobachtungssensor eine Auflösung von etwa 250 m besitzt.

7. Verfahren zur Erdbeobachtung, wobei
- von einem raumgestützten Beobachtungssensor kontinuierlich ein Ausschnitt des überflogenen Geländes mit hoher Auflösung erfaßt wird
- die Sensordaten in einer bordseitigen Datenverarbeitungsvorrichtung kurzzeitig gespeichert werden
- eine Untermenge der Sensordaten mit geringerer Auflösung an mehrere Bodenstationen übertragen wird
- an den Bodenstationen unabhängig voneinander eine Auswahl aus den übertragenen Sensordaten erfolgt
- das Ergebnis der Auswahl jeder Bodenstation an die bordseitige Datenverarbeitungsvorrichtung übertragen wird
- die ausgewählten Daten aus der bordseitigen Datenverarbeitungsvorrichtung noch im Verlauf des aktuellen Überflugs an die Bodenstationen übertragen werden.

8. Verfahren zur Erdbeobachtung nach Anspruch 7, dadurch gekennzeichnet, daß der Beobachtungssensor eine Auflösung von etwa 3 m besitzt.

9. Verfahren zur Erdbeobachtung nach Anspruch 7 oder 8, dadurch gekennzeichnet, daß die Sensordaten für eine Zeitdauer von 6 Minuten in der bordseitigen Datenverarbeitungsvorrichtung gespeichert werden.

10. Verfahren zur Erdbeobachtung, wobei
- ein raumgestützter Beobachtungssensor mit definierter Erdoberflächenorientierung ein Ausschnitt des überflogenen Geländes erfaßt
- Bodenstationen, denen diese Orientierung und die entsprechenden Beobachtungsbereiche im voraus bekannt sind, unabhängig voneinander eine Auswahl aus den zukünftigen Beobachtungsbereichen treffen und das Ergebnis der Auswahl an den raumgestützten Beobachtungssensor übertragen, nachdem dieser in den Empfangsbereich einer Bodenstation eingetreten ist
- der Beobachtungssensor die ausgewählten Geländeausschnitte noch während des aktuellen Überflugs erfaßt.

11. Verfahren nach Anspruch 10, dadurch gekennzeichnet, daß die Sensordaten noch während des aktuellen Überflugs an die Bodenstationen übertragen werden.

## Claims

1. Process for earth observation, wherein
- a section of the overflown terrain is detected continuously by a first observation sensor supported in space
- in parallel with the data acquisition, the sensor data are transmitted continuously to several ground stations
- at the ground stations, independently of one another, a selection is made from the transmitted observation data, and the result of the selection of each ground station is transmitted to a second observation sensor supported in space, the observation area of the second observation sensor lagging behind the observation area of the first observation sensor, and the two observation areas covering the same width transverse to the direction of flight
- the terrain sections that correspond to the selected sensor data and that are within the observation area of the second observation sensor are detected by that second observation sensor, the resolution of the second observation sensor being higher than that of the first observation sensor.

2. Process according to claim 1, characterised in that the sensor data of the second observation sensor are transmitted to the ground stations while the current overflight is still in progress.

3. Process for earth observation according to either of the preceding claims, characterised in that parameters for the data acquisition of the second observation sensor supported in space, for example resolution, spectral channel, are communicated by the ground stations.

4. Process for earth observation according to any one of the preceding claims, characterised in that the distance between the observation areas of the first and second observation sensor is approximately 300 km.

5. Process for earth observation according to any one of the preceding claims, characterised in that the second observation sensor has a variable resolution, the maximum resolution being approximately 3 m.

6. Process for earth observation according to any one of the preceding claims, characterised in that the first observation sensor has a resolution of approximately 250 m.

7. Process for earth observation, wherein
- a section of the overflown terrain is detected continuously by a high resolution observation sensor supported in space
- the sensor data are stored short-term in an on-board data-processing apparatus
- a subset of the sensor data with low resolution is transmitted to several ground stations
- a selection is made from the transmitted sensor data at the ground stations, independently of one another
- the result of the selection of each ground station is transmitted to the on-board data-processing apparatus
- the selected data from the on-board data-processing apparatus are transmitted to the ground stations while the current overflight is still in progress.

8. Process for earth observation according to claim 7, characterised in that the observation sensor has a resolution of approximately 3 m.

9. Process for earth observation according to claim 7 or 8, characterised in that the sensor data are stored in the on-board data-processing apparatus for a period of 6 minutes.

10. Process for earth observation, wherein
- an observation sensor supported in space and having a defined earth surface orientation detects a section of the overflown terrain
- ground stations to which that orientation and the corresponding observation areas are known in advance make, independently of one another, a selection from the future observation areas and transmit the result of the selection to the observation sensor supported in space when the latter has entered the receiving range of a ground station
- the observation sensor detects the selected terrain sections while the current overflight is still in progress.

11. Process according to claim 10, characterised in that the sensor data are transmitted to the ground stations while the current overflight is still in progress.

## Revendications

1. Procédé d'observation de la terre, dans lequel
- une portion du terrain survolé est enregistrée en continu par un premier détecteur d'observation dans l'espace,
- les données de détection sont transmises en continu pour la saisie des données à plusieurs stations au sol
- les stations au sol effectuent indépendamment les unes des autres une sélection parmi les données d'observation transmises et le résultat de la sélection de chaque station au sol est transmis à un second détecteur d'observation dans l'espace, la zone d'observation du second détecteur d'observation étant en retard par rapport au premier détecteur d'observation et les deux zones d'observation recouvrant la même largeur perpendiculairement à la direction du vol
- le second détecteur d'observation enregistre à l'intérieur de sa zone d'observation les portions de terrain correspondant aux données de détection sélectionnées, la résolution du second détecteur d'observation étant plus grande que celle du premier détecteur d'observation.

2. Procédé selon la revendication 1, caractérisé en ce que les données de détection du second détecteur d'observation sont transmises encore au cours du survol actuel aux stations au sol.

3. Procédé d'observation de la terre selon l'une des revendications précédentes, caractérisé en ce que les stations au sol transmettent des paramètres pour l'enregistrement des données du second détecteur d'observation dans l'espace, par exemple résolution, canal spectral.

4. Procédé d'observation de la terre selon l'une des revendications précédentes, caractérisé en ce que la distance entre les zones d'observation des premier et second détecteurs d'observation est de l'ordre de 300 km.

5. Procédé d'observation de la terre selon l'une des revendications précédentes, caractérisé en ce que le second détecteur d'observation présente une résolution variable, la résolution maximale étant d'environ 3 m.

6. Procédé d'observation de la terre selon l'une des revendications précédentes, caractérisé en ce que la résolution du premier détecteur d'observation est d'environ 250 m.

7. Procédé d'observation de la terre selon l'une des revendications précédentes, dans lequel
- un détecteur d'observation dans l'espace enregistre en continu, avec une haute résolution, une portion du terrain survolé
- les données de détection sont mémorisées temporairement par un équipement de bord pour le traitement des données
- une sous-quantité de données de détection est transmise avec une résolution plus faible à plusieurs stations au sol
- les stations au sol effectuent indépendamment les unes des autres une sélection parmi les données de détection transmises
- le résultat de la sélection de chaque station au sol est transmis à l'équipement de bord pour le traitement des données
- les données sélectionnées provenant de l'équipement de bord pour le traitement des données sont transmises encore au cours du survol actuel aux stations au sol.

8. Procédé d'observation de la terre selon la revendication 7, caractérisé en ce que le détecteur d'observation présente une résolution d'environ 3 m.

9. Procédé d'observation de la terre selon la revendication 7 ou 8, caractérisé en ce que les données de détection sont mémorisées pendant une durée de 6 minutes dans l'équipement de bord pour le traitement des données.

10. - Procédé d'observation de la terre, dans lequel
- un détecteur d'observation dans l'espace avec une orientation définie par rapport à la surface terrestre enregistre une portion du terrain survolé
- des stations au sol qui connaissent à l'avance cette orientation et les zones d'observation correspondantes, effectuent indépendamment les unes des autres une sélection parmi les zones d'observation futures et transmettent le résultat de la sélection au détecteur d'observation dans l'espace dès que celui-ci est entré dans la zone de réception d'une station au sol
- le détecteur d'observation enregistre encore au cours du survol actuel les portions de terrain sélectionnées.

11. Procédé selon la revendication 10, caractérisé en ce que les données de détection sont transmises encore au cours du survol actuel aux stations au sol.
